# DEMANDE DE BREVET EUROPEEN

(11) **EP 4 604 233 A1**
(43) Date de publication de la demande: **20.08.2025**
(21) Numéro de dépôt: 24305245.3
(22) Date de dépôt: 13.02.2024
(51) Int. Cl.: H01M 10/04, H01M 50/103, H01M 50/119, H01M 50/15, H01M 50/159, H01M 50/169, H01M 50/176, H01M 50/209, H01M 50/249, H01M 50/342, H01M 50/533, H01M 50/548, H01M 50/557

(54) **GODET DE BOITIER DE CELLULE, BOITIER ASSOCIE, CELLULE DE BATTERIE COMPRENANT UN TEL BOITIER ET ASSEMBLAGE DE TELLES CELLULES**

(71) Demandeur: Automotive Cells Company SE, 33520 Bruges (FR)
(72) Inventeur: BAYLAC, Johan, 33800 Bordeaux (FR); CHAUVEAU, Pierre, 33520 Bruges (FR); MATHIEU, Alexandre, 33300 Bordeaux (FR)
(74) Mandataire: Alatis

(57) **Abrégé**

L'invention concerne un godet (20) pour un boitier (100) d'une cellule (10) de batterie, le godet (20) comprenant au moins deux parois latérales (103A, 103B) s'étendant parallèlement entre elles et parallèlement à un axe de référence (X), le godet (20) étant caractérisé en ce qu'il comprend : un premier orifice principal (111) formé sur une première (101) des deux parois latérales et configuré pour accueillir un premier terminal (11) de cellule (10) ; et un deuxième orifice principal (112) formé sur une deuxième (102) des deux parois latérales, le deuxième orifice (112) étant configuré pour accueillir un deuxième terminal (12) de cellule (10).

## Description

### DOMAINE TECHNIQUE DE L'INVENTION

L'invention concerne, de façon générale, le domaine technique des cellules de batteries de véhicules hybrides ou électriques.

L'invention se rapporte plus spécifiquement aux cellules de batteries et à l'assemblage associé.

### ÉTAT DE LA TECHNIQUE ANTÉRIEURE

Les véhicules automobiles à traction, à propulsion ou à quatre roues motrices électrique ou hybride, comportent un ou plusieurs modules de batterie reliés à un réseau de puissance pour alimenter un moteur électrique (de traction, de propulsion ou de quatres roues motrices).

Les modules de batterie sont regroupés dans un carter et forment alors un bloc batterie aussi souvent désigné par l'expression anglaise « battery pack », ce carter contenant généralement une interface de montage et des bornes de raccordement.

Chaque module de batterie comprend au moins une cellule électrochimique, généralement plusieurs cellules électrochimiques, générant du courant par réaction chimique, par exemple de type lithium-ion (ou Li-ion), de type Ni-Mh, ou Ni-Cd ou plomb.

Une cellule électrochimique peut être de forme parallélépipédique rectangle, on parle alors de cellule « prismatique », de forme cylindrique ou en forme de poche, désignée par l'expression anglaise « pouch ».

Les cellules prismatiques comportent un boitier rigide, souvent métallique, comprenant quatre parois latérales et deux parois d'extrémité, dont une paroi dite « d'appui ». À l'intérieur du boitier sont logés une pluralité d'empilements d'électrodes positives reliées les unes aux autres à un premier terminal, et une pluralité d'empilements d'électrodes négatives reliées les unes aux autres à un deuxième terminal.

De façon plus précise, un premier collecteur de courant relie la pluralité d'empilements d'électrodes positives au premier terminal et un deuxième collecteur de courant relie la pluralité d'empilements d'électrodes négatives au deuxième terminal. Les premier et deuxième collecteurs de courant se présentent sous la forme de feuilles métalliques pliées et soudées aux terminaux. Les terminaux sont eux-mêmes fixés/soudés sur la paroi d'extrémité opposée à la paroi d'appui de la cellule.

Il est connu d'assembler, en série et/ou en parallèle, une pluralité de cellules électrochimiques afin de réaliser des modules ou des batteries électriques, à l'aide d'un dispositif d'interconnexion assurant un contact électrique entre les terminaux de deux cellules électrochimiques voisines. Le dispositif d'interconnexion peut par exemple être un ensemble de languettes métalliques soudées sur plusieurs terminaux de cellules pour les relier électriquement.

Afin d'assembler mécaniquement les cellules électrochimiques reliées électriquement, il est connu de les aligner sur un support plan ou un rail, la paroi d'appui étant en contact plan avec le support ou le rail, et de les maintenir aux deux extrémités compressées par des plaques parallèles fixes, un tel assemblage étant désigné sous le terme « module ».

Cependant, le positionnement des terminaux sur une paroi d'extrémité de la cellule oblige l'utilisation d'éléments d'interconnexion pour relier les cellules entre elles. L'ajout de ces éléments d'interconnexion prolonge le temps de production d'un module, et, lorsque ces éléments sont soudés aux terminaux, ils ne permettent pas le démontage d'un module de batterie.

De plus, il est nécessaire de prévoir un volume supplémentaire à l'intérieur du boitier des cellules, ce volume étant situé entre les empilements d'électrodes et la paroi d'extrémité opposée à la paroi d'appui du boitier et servant à l'intégration des collecteurs de courant. L'encombrement spatial des cellules et des modules est important, sans pour autant augmenter leur volume utile. Leur intégration dans des véhicules hybrides et électriques s'en trouve limitée.

Enfin, le pliage des collecteurs de courant, qui sont des feuilles métalliques, exerce une contrainte permanente sur ces collecteurs qui peuvent, au cours des utilisations et des chocs prolongés, s'abîmer voire se déchirer et compromettre le fonctionnement des cellules et des modules de batterie.

### EXPOSE DE L'INVENTION

L'invention vise à remédier à tout ou partie des inconvénients de l'état de la technique en proposant notamment une solution permettant d'obtenir une cellule de batterie à l'encombrement spatial réduit et dans laquelle les collecteurs de courant ne sont pas déformés.

L'invention concerne également un assemblage simplifié de cellules et un ensemble de cellules résultant de cet assemblage.

Pour ce faire est proposé, selon un premier aspect de l'invention, un godet pour un boitier de cellule pour une cellule de batterie, le godet comprenant au moins deux parois latérales s'étendant parallèlement entre elles et parallèlement à un axe longitudinal de référence, le godet étant remarquable en ce qu'il comprend :
- un premier orifice principal formé sur une première des deux parois latérales et configuré pour accueillir un premier terminal de cellule ; et
- un deuxième orifice principal formé sur une deuxième des deux parois latérales, l'orifice étant configuré pour accueillir un deuxième terminal de cellule.

Grâce à une telle combinaison de caractéristiques, tous les composants du godet de cellule (aussi appelé « can » en termes anglosaxons) sont compris entre un premier plan parallèle à la première paroi latérale du godet et un deuxième plan parallèle à la deuxième paroi latérale du godet. Ainsi, un assemblage de boitiers de cellule peut être réalisé par simple empilement de boitiers de cellules, ce qui réduit le nombre d'éléments d'interconnexion utilisés pour réaliser l'assemblage.

De plus, la fabrication d'un tel godet de cellule présente l'avantage de pouvoir être aisément intégrée dans une chaîne de production automatisée, ce qui impacte le coût de revient du godet à la baisse.

Selon un mode de réalisation, le godet est obtenu par extrusion et les premier et deuxième orifices par perçage d'une portion de la matière extrudée.

De préférence, les premier et deuxième orifices principaux présentent un contour rectangulaire.

Selon un mode de réalisation, le godet comporte au moins quatre parois latérales s'étendant parallèlement entre elles deux à deux et parallèlement à un axe de référence depuis une première portion d'extrémité jusqu'à une deuxième portion d'extrémité, le premier orifice principal étant disposé au voisinage de la première portion d'extrémité, et le deuxième orifice principal étant disposé au voisinage de la deuxième portion d'extrémité.

Plus précisément, pour une longueur de godet correspondant à la distance entre la première portion d'extrémité et la deuxième portion d'extrémité du godet :
- le premier orifice principal est compris dans le premier quart de la longueur du godet adjacent à la première portion d'extrémité du godet ; et
- le deuxième orifice principal est compris dans le premier quart de la longueur du godet adjacent à la deuxième portion d'extrémité du godet ;
   de sorte que les premier et deuxième orifices principaux sont disposés de part et d'autre d'un plan transversal médian du godet, de préférence à égale distance axiale du plan transversal médian du godet.

Selon un mode de réalisation, le godet comprend :
- un premier orifice secondaire complémentaire du premier orifice principal, le premier orifice secondaire étant disposé de préférence transversalement en regard du premier orifice principal ; et/ou
- un deuxième orifice secondaire complémentaire du deuxième orifice principal, le deuxième orifice secondaire étant disposé de préférence transversalement en regard du deuxième orifice principal.

Les premier et deuxième orifices secondaires servent à des opérations de montage, notamment à l'intégration des premier et deuxième terminaux de cellule dans les premier et deuxième orifices principaux.

Selon un mode de réalisation, le godet est au moins en partie, de préférence intégralement, en matériau(x) métallique(s).

Selon un autre aspect de l'invention, celle-ci a trait à un boitier de cellule pour une cellule de batterie, remarquable en ce qu'il comprend un godet tel que décrit ci-avant, et au moins un couvercle configuré pour fermer un espace intérieur du godet.

L'invention fournit ainsi un boitier de cellule à l'assemblage simple. De préférence, le boitier comporte deux couvercles configurés pour fermer l'espace intérieur du godet.

Selon un mode de réalisation préférentiel, le ou les couvercles sont joints au godet par une soudure laser.

Selon un mode de réalisation, au moins une paroi du boitier est pourvue d'au moins un évent d'aération fermé par une paroi amincie configurée pour former un point de faiblesse du boitier en cas d'effet de gonflement contenu à l'intérieur de la cellule, de préférence une paroi du couvercle.

Selon un mode de réalisation, le boitier comporte une première et une deuxième parois d'extrémité et quatre parois latérales s'étendant parallèlement entre elles deux à deux et parallèlement à un axe de référence depuis la première paroi d'extrémité jusqu'à la deuxième paroi d'extrémité, les première et deuxième parois latérales du boitier étant formées par des grandes surfaces latérales du boitier, c'est-à-dire des surfaces présentant chacune une aire supérieure à une aire de chacune des surfaces des deux autres parois latérales et supérieure à une aire de chacune des surfaces des parois d'extrémités du boitier.

Selon un mode de réalisation, le boitier comporte un premier couvercle et un deuxième couvercle, portant respectivement la première et la deuxième parois d'extrémité.

De préférence, l'évent d'aération est monté sur la première et/ou la deuxième parois d'extrémité du boitier. De cette manière, l'évent d'aération peut s'étendre sur une surface importante du boitier et garantir une aération suffisante pour contrer de façon optimale un éventuel effet de gonflement de la cellule.

Selon un mode de réalisation, le boitier possède une longueur supérieure à 250 mm, de préférence supérieure à 300 mm et/ou inférieure à 1500 mm, de préférence inférieure à 1200 mm.

Selon un autre aspect de l'invention, celle-ci a trait à une cellule de batterie remarquable en ce qu'elle comprend un boitier de cellule tel que décrit ci-avant.

La cellule de batterie ainsi obtenue contient des composants connus de l'état de l'art et agencés de telle sorte que l'encombrement spatial de la cellule s'en trouve réduit.

Selon un mode de réalisation préférentiel,
- le premier terminal comprend une surface de contact électrique configurée pour venir au contact d'un autre terminal d'une cellule distincte adjacente, la surface de contact étant parallèle à l'axe de référence du boitier ; et
- le deuxième terminal comprend une surface de contact électrique pour venir au contact d'un autre terminal d'une cellule distincte adjacente, la surface de contact étant parallèle à l'axe de référence du boitier.

Selon un mode de réalisation, le boitier délimite un espace intérieur de la cellule dans lequel est logé au moins un empilement d'électrodes positives et négatives, les électrodes positives étant reliées les unes aux autres à un premier terminal de cellule et les électrodes négatives étant reliées les unes aux autres à un deuxième terminal de cellule, et :
- le premier terminal de cellule est maintenu fixement par une interface de fixation dans le premier orifice principal ; et
- le deuxième terminal de cellule est maintenu fixement par une interface de fixation dans un deuxième orifice principal.

Plus précisément, dans l'espace intérieur de la cellule, toutes les électrodes positives sont reliées à un premier collecteur de courant, et toutes les électrodes négatives sont reliées à un deuxième collecteur de courant, les premier et deuxième collecteurs se présentant sous la forme de feuilles métalliques. Le boitier de l'invention présente pour avantage une diminution des contraintes exercées sur les collecteurs de courant, qui ne sont pas pliés mais s'étendent parallèlement à l'axe de référence du boitier et sont soudés, chacun à une extrémité axiale, au terminal de cellule respectif. L'invention remédie ainsi aux risques de rupture des collecteurs de courant et/ou de mauvaise propagation du courant dans les terminaux des cellules.

Selon un mode de réalisation, les premier et deuxième terminaux de la cellule sont orientés suivant deux directions opposées.

Selon un mode de réalisation :
- le premier terminal de la cellule ferme de manière étanche le premier orifice principal du godet ; et
- le deuxième terminal de la cellule ferme de manière étanche le deuxième orifice principal du godet.

Selon un aspect de l'invention, celle-ci concerne un assemblage d'une pluralité de cellules de batterie décrites ci-avant, l'assemblage étant remarquable en ce que les cellules sont accolées successivement deux à deux suivant un axe d'assemblage, de sorte que pour chaque paire de cellules adjacentes de la pluralité de cellules, un premier terminal de l'une des cellules de la paire de cellules adjacentes est en contact avec un deuxième terminal de l'autre des cellules de la paire de cellules adjacentes.

L'assemblage obtenu ne nécessite pas d'éléments additionnels d'interconnexion pour relier électriquement les terminaux des cellules entre eux.

Selon un mode de réalisation, l'assemblage comprend des moyens de compression pour presser l'assemblage de cellules de part et d'autre dudit assemblage de cellules suivant l'axe d'assemblage.

Les moyens de compressions garantissent le contact entre les surfaces de contact des premier et deuxième terminaux des cellules.

### BRÈVE DESCRIPTION DES FIGURES

D'autres caractéristiques et avantages de l'invention ressortiront à la lecture de la description qui suit, en référence aux figures annexées, qui illustrent :
- figure 1 : une vue en perspective isométrique d'une portion de godet de cellule selon un premier mode de réalisation de l'invention ;
- figure 2 : une vue en perspective isométrique de la cellule de batterie muni du godet de la figure 1 ;
- figure 3 : une coupe en perspective isométrique d'une portion d'une première face d'une cellule de batterie selon le premier mode de réalisation ;
- figure 4 : une vue en perspective isométrique d'une portion d'une deuxième face d'une cellule de batterie selon le premier mode de réalisation ;
- figure 5 : une vue en perspective isométrique représentant l'assemblage d'une pluralité de cellules obtenues selon un mode de réalisation de l'invention ;

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

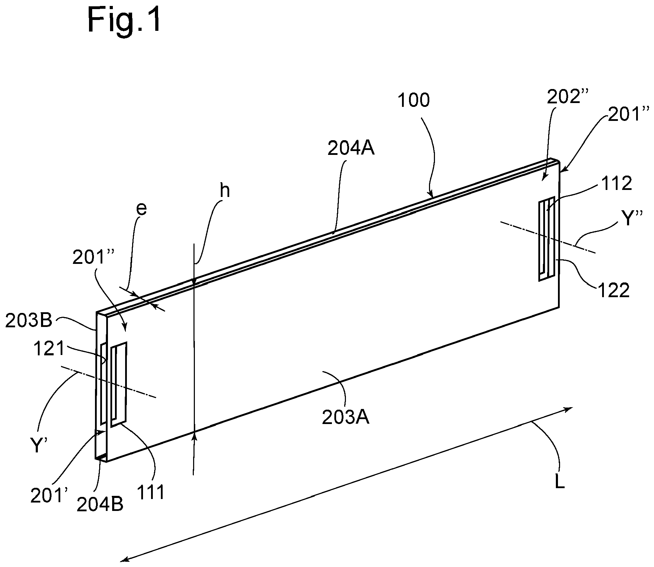

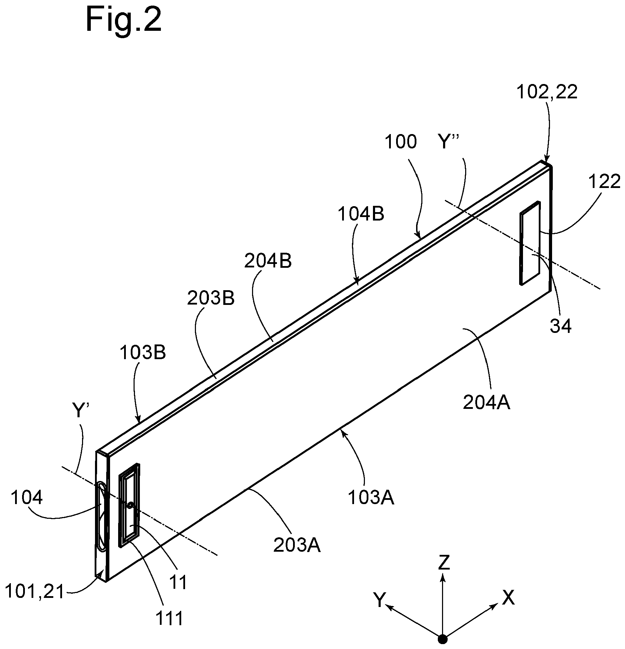

Sur la figure 1 est illustré une partie d'un godet **20** d'un boitier **100** d'une cellule **10** prismatique d'une batterie. La figure 2 illustre une cellule **10** de batterie comportant un tel godet **20.**

Le godet **20** forme un corps principal du boitier **100** de cellule **10.** Le godet **20** présente une forme prismatique de forme parallélépipédique rectangle, et comprend quatre parois latérales **203A, 203B, 204A, 204B,** les quatre parois latérales s'étendant parallèlement entre elles deux à deux et parallèlement à un axe longitudinal de référence **X** du godet **20** depuis une première portion d'extrémité **201"** jusqu'à une deuxième portion d'extrémité **202"** axialement opposée. Le godet **20** est au moins en partie en matériau(x) métallique(s), de préférence constitué de matériau(x) métallique(s), par exemple en aluminium.

En particulier, les quatre parois latérales **203A, 203B, 204A, 204B** du godet 20 comprennent deux parois latérales parallèles en vis-à-vis dites « petites » parois **204A, 204B,** et de deux parois latérales parallèles en vis-à-vis dites « grandes » parois **203A, 203B,** les grandes parois **203A, 203B,** présentant chacune une aire supérieure à l'aire des petites parois **204A, 204B.** Tel que représenté sur la figure 1, les « petites » parois **204A, 204B** forment des parois supérieure et inférieure, respectivement et s'étendent horizontalement. Les « grandes » parois **203A, 203B** forment des parois latérales avant et arrière et s'étendent verticalement.

Les parois latérales **203A, 203B, 204A, 204B** sont adjacentes deux à deux et forment un sous-ensemble tubulaire de section rectangulaire ouvert à longitudinalement de part et d'autre, chaque portion d'extrémité **201", 202"** présentant une ouverture, respectivement une première ouverture **201'** et une deuxième ouverture **202'.** De cette manière, les parois latérales **203A, 203B, 204A, 204B** du godet **20** délimitent un espace intérieur ouvert de part et d'autre, axialement par rapport à l'axe de référence **X.**

La première ouverture **201'** et la deuxième ouverture **202'** du godet **20** s'étendent dans des plans parallèles l'un avec l'autre et orthogonaux aux parois latérales **203A, 203B, 204A, 204B** du godet **20.**

Le godet **20** possède une longueur **L** qui désigne la plus grande dimension dudit godet **20** et qui correspond à la distance mesurée longitudinalement entre les première et deuxième portions d'extrémité **201", 202"** du godet **20,** et une hauteur **h** correspondant à la distance mesurée verticalement entre les « petites » parois latérales **204A, 204B** du godet **20.** Plus précisément, le godet **20** possède une longueur supérieure à 250 mm, de préférence supérieure à 300 mm et/ou inférieure à 1500 mm, de préférence inférieure à 1200 mm.

Conformément à l'invention, le godet **20** comprend :
- un premier orifice principal **111** formé sur une première paroi latérale du godet **20** parmi la pluralité de parois latérales **203A, 203B, 204A, 204B,** en particulier l'une grande paroi latérale **203A** du godet **20 ;** et
- un deuxième orifice principal **112** formé sur une deuxième paroi latérale du godet **20** parmi la pluralité de parois latérales **203A, 203B, 204A, 204B,** en particulier l'autre grande paroi latérale **203B** du godet **20,** la deuxième paroi latérale **203B** étant parallèle à la première paroi latérale **203A** du godet **20.**

En particulier, la distance mesurée transversalement entre les première et deuxième parois latérales **203A, 203B** du godet **20,** c'est-à-dire entre les deux grandes parois ou les parois avant et arrière, défini une épaisseur e du godet **20** de la cellule **10** de batterie. Chacun des premier et deuxième orifices principaux **111,112** est configuré pour accueillir respectivement un premier terminal **11** et un deuxième terminal **12** de la cellule **10** de batterie. Les première et deuxième parois latérales **203A, 203B** du godet **20** traversées respectivement par les premier et deuxième orifices principaux **111, 112** correspondent aux grandes parois latérales **203A, 203B** verticales avant et arrière du godet **20.**

De manière générale, le premier orifice principal **111** est disposé au voisinage de la première portion d'extrémité **201"** du godet **20,** et le deuxième orifice principal **112** est disposé au voisinage de la deuxième portion d'extrémité **202"** du godet **20.** En particulier :
- le premier orifice principal **111** est compris dans le premier quart de la longueur **L** du godet **20** adjacent à la première portion d'extrémité **201"** du godet **20 ;** et
- le deuxième orifice principal **112** est compris dans le premier quart de la longueur **L** du godet **20** adjacent à la deuxième portion d'extrémité **202"** du godet **20** ;
   de sorte que les premier et deuxième orifices principaux **111, 112** sont disposés de part et d'autre d'un axe transversal médian du godet **20** parallèle à un axe transversal **Y** du godet **20.** De préférence, le premier orifice principal **111** est situé à proximité de la première ouverture **201'** et le deuxième orifice principal **112** est situé à proximité de la deuxième ouverture **202'.**

De préférence, les premier et deuxième orifices principaux 111, 112 sont situés à égale distance des petites parois latérales **204A, 204B,** du godet 20, de manière à être centrés suivant la direction verticale du godet **20.** Bien entendu, l'homme du métier peut décentrer les premier et deuxième orifices principaux 111, 112 pour répondre à des besoins techniques spécifiques, sans pour autant changer la portée de l'invention.

De préférence, la distance mesurée axialement entre le premier orifice principal **111** et la première portion d'extrémité **201"** du godet **20** est égale à la distance mesurée axialement entre le deuxième orifice principal **112** et la deuxième portion d'extrémité **202"** du godet **20.**

De plus, le godet **20** comprend :
- un premier orifice secondaire **121** complémentaire du premier orifice principal **111,** le premier orifice secondaire **121** étant disposé de préférence transversalement en regard du premier orifice principal **111** ; et/ou
- un deuxième orifice secondaire **122** complémentaire du deuxième orifice principal **112,** le deuxième orifice secondaire **122** étant disposé de préférence transversalement en regard du deuxième orifice principal **112.**

Dans cet exemple, les dimensions des premier et deuxième orifices secondaires **121, 122** sont similaires à celles des premier et deuxième orifices principaux **111, 112.**

Le premier orifice secondaire **121** est formé sur la deuxième paroi latérale **203B** du godet **20,** et le deuxième orifice secondaire **122** est formé sur la première paroi latérale **203A** du godet **20.** De cette manière, chaque paire d'un orifice principal et d'un orifice secondaire est aligné parallèlement à un axe transversal **Y** orthogonal à l'axe longitudinal de référence **X** et les orientations des deux paires d'orifices principal et secondaire sont opposées.

Ainsi, d'un côté du godet **20,** la première paroi latérale **203A** du godet **20** est traversée par le premier orifice principal **111** configuré pour accueillir le premier terminal **11** de cellule **10** et de l'autre côté du godet **20,** sur la paroi opposée, la deuxième paroi latérale **203B** du godet **20** est traversée par le premier orifice secondaire **121.** Ces deux orifices **111, 121** sont centrés suivant un axe de terminal **Y'** parallèle à l'axe transversal **Y.** De plus, la deuxième paroi latérale **203B** du godet **20** est traversée par le deuxième orifice principal **112** configuré pour accueillir le deuxième terminal **12** de cellule **10** en position assemblée et la première paroi latérale **203A** du godet **20** est traversée par le deuxième orifice secondaire **122.** Ces deux orifices **112, 122** sont centrés suivant un axe de terminal **Y"** parallèle à l'axe transversal **Y.**

La figure **2** représente la cellule **10** de batterie, la cellule **10** comprenant le boitier **100** dans lequel sont insérés le premier terminal **11** et le deuxième terminal **12.**

Le boitier **100** de la cellule **10** est rigide, contrairement par exemple aux cellules en forme de poche. Le boitier **100** délimite un espace intérieur **30** de la cellule **10** à l'intérieur duquel est logé un ou plusieurs empilements électrochimiques (i.e. les « stacks ») pour former la cellule **10.** Dans ces exemples, le boitier **100** de la cellule **10** est prévu pour loger le ou les empilements électrochimiques avec un électrolyte solide ou liquide (non illustré).

Le boitier **100** de la cellule **10** présente une forme prismatique de forme parallélépipédique rectangle. Le boitier **100** comprend une première paroi d'extrémité **101,** une deuxième paroi d'extrémité **102,** et quatre parois latérales **103A, 103B, 104A, 104B,** les quatre parois latérales s'étendant parallèlement entre elles deux à deux et parallèlement à l'axe longitudinal de référence **X.**

Les parois latérales **103A, 103B, 104A, 104B** du boitier **100** s'étendent parallèlement à l'axe longitudinal de référence **X,** depuis la première paroi d'extrémité **101** jusqu'à la deuxième paroi d'extrémité **102** opposée longitudinalement.

Le boitier **100** comprend, et en particulier est constitué par le godet **20** fermé par deux couvercles : un premier couvercle **21** et un deuxième couvercle **22.**

Les quatre parois latérales **103A, 103B, 104A, 104B** du boitier **100** sont formées respectivement par les quatre parois latérales **203A, 203B, 204A, 204B** du godet **20.**

Ainsi, la première paroi latérale **103A** du boitier **100** est traversée par le premier orifice principal **111** dans lequel est inséré le premier terminal **11** de cellule **10** en position assemblée orientée suivant un premier axe transversal **Y'.** La deuxième paroi latérale **103B** du boitier **100** est traversée par le deuxième orifice principal **112** dans lequel est inséré le deuxième terminal **12** de cellule **10** en position assemblée orienté dans un deuxième axe transversal **Y",** parallèle à l'axe **Y',** mais dans un sens opposé au premier terminal **11.** Le premier terminal **11** est spécifiquement positionné pour fermer au moins en partie le premier orifice principal **111** du boitier **100** avec l'aide d'une interface de fixation **110** associée, et le deuxième terminal **12** est spécifiquement positionné pour fermer au moins en partie le deuxième orifice principal **112** du boitier **100,** avec l'aide d'une interface de fixation (non représentée) associée.

De plus, la première paroi latérale **103A** du boitier **100** est traversée par le deuxième orifice secondaire **122,** et la deuxième paroi latérale **103B** du boitier **100** est traversée par le premier orifice secondaire **121.**

Les premier et deuxième terminaux **11, 12** de la cellule **10** possèdent respectivement une première surface de contact électrique **S1** et une deuxième surface de contact électrique **S2** parallèles aux parois latérales **103A, 103B** du boitier **100.** Les surfaces de contact **S1, S2** planes des premiers et deuxième terminaux **11, 12** sont constituées d'un matériau électriquement conducteur.

La première paroi d'extrémité **101** du boitier **100** est constituée par le premier couvercle **21,** et la deuxième paroi d'extrémité **102** du boitier **100** est constituée par le deuxième couvercle **22.**

Plus précisément, la première ouverture **201'** et la deuxième ouverture **202'** du godet **20** sont fermées de part et d'autre du godet **20** respectivement par le premier couvercle **21** et le deuxième couvercle **22** du boitier **100.** De préférence, les premier et deuxième couvercles **21, 22** sont soudés respectivement aux première et deuxième portions d'extrémités **201", 202"** du godet **20.** Suivant d'autres modes de réalisation, les premier et deuxième couvercles **21, 22** peuvent être clipsés ou sertis respectivement aux première et deuxième portions d'extrémités **201", 202"** du godet **20.**

Les parois latérales **203A, 203B, 204A, 204B** du godet **20,** le premier couvercle **21** et le deuxième couvercle **22** en position assemblée délimitent l'espace intérieur **30** de la cellule**10** correspondant à l'espace intérieur **30** du godet **20.**

Les parois d'extrémité **101, 102** du boitier **100** comportent chacune un évent d'aération **104** prévu pour évacuer la chaleur produite dans l'espace intérieur **30** du godet **20.**

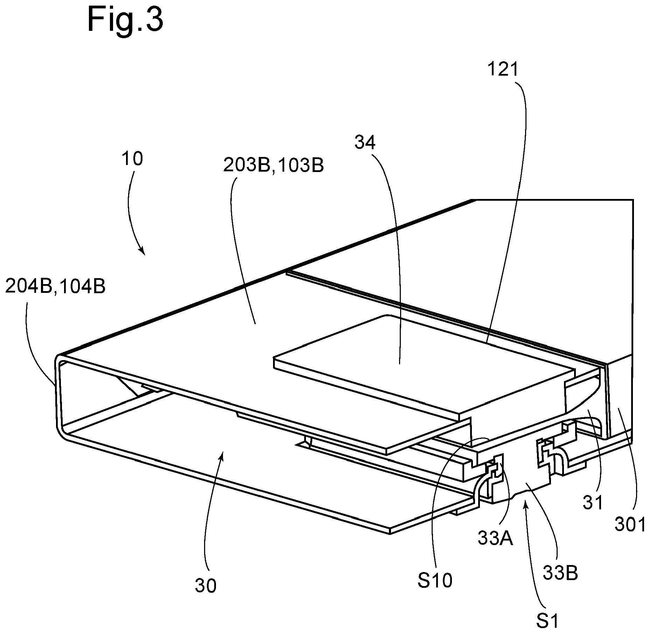

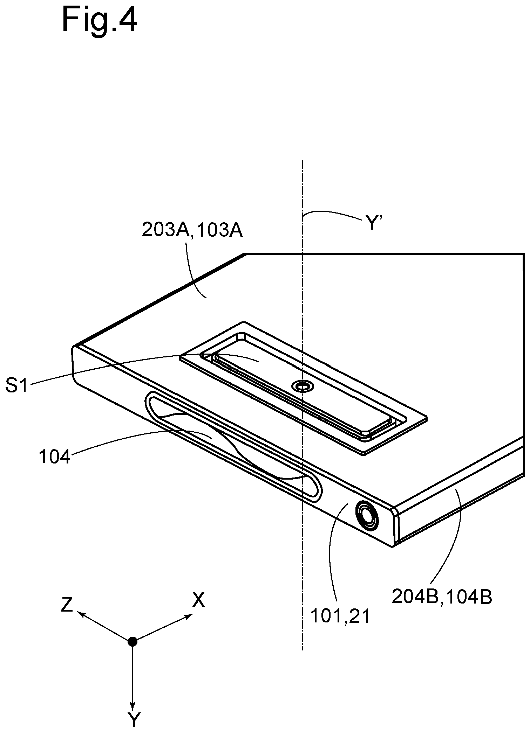

Sur les figures 3 et 4 sont illustrés deux détails de la cellule **10,** comprenant l'espace intérieur **30** du godet **20** et une première interface de fixation **110** maintenant fixement en position le premier terminal de cellule **11** à travers le premier orifice principal **111.**

La première interface de fixation **110** permet de maintenir le premier terminal de cellule **11** en position traversante du premier orifice principal **111,** la première interface de fixation **110** comprenant au moins une paire de pièces annulaires **33A, 33B** entourant le premier terminal **11** et comprenant une pièce annulaire intérieure **33A** de fixation et une pièce annulaire extérieure **33B** de fixation coopérant ensemble à travers l'orifice principal **111** et assurant une fonction de maintien du premier terminal **11** et d'étanchéité entre l'intérieur du boitier **100** et l'extérieur. Le maintien assuré par la paire de pièces annulaires **33A, 33B** est d'une part longitudinal pour permettre de maintenir centré le premier terminal **11** à travers ledit orifice principal **111,** et d'autre part, transversal en maintenant le premier terminal **11** à un même niveau. Ces moyens de maintien permettent de maintenir déportée la surface de contact **51** correspondante à une distance prédéterminée de la paroi associée du boitier **103A,** qui est constante.

Dans l'espace intérieur **30** du godet **20** est logé au moins un empilement **301** formé de paires d'électrodes positives et d'électrodes négatives et d'un séparateur séparant chaque paire d'électrodes, le nombre d'empilements variant selon la taille du boitier **100** de la cellule **10.** Les électrodes d'une même polarité sont reliées à un premier collecteur de courant **31** qui présente le plus souvent une forme de feuillard métallique permettant de relier électriquement les électrodes d'un premier pôle électrique de l'empilement **301,** par exemple de polarité positive, au premier terminal **11** de cellule.

Plus précisément, le premier collecteur de courant **31** s'étend longitudinalement dans l'espace intérieur **30** du godet **20.** Une extrémité distale du premier collecteur de courant **31** vient se loger à une extrémité de l'espace intérieur **30** du godet **20.** Le premier collecteur de courant **31** prend la forme d'une lamelle en matériau électriquement conducteur pincée transversalement d'une part entre une butée **34** et d'autre part, le premier terminal **11** de cellule.

Dans une telle configuration, le premier collecteur de courant **31** vient au contact d'une surface intérieure **S10** électriquement conductrice, de préférence plane, du premier terminal de cellule **11,** sur laquelle il est fixé par soudure, de préférence par une soudure laser.

Le premier orifice secondaire **121** permet, lors de l'assemblage de la cellule **10** de batterie, d'offrir une fenêtre d'accès à l'intérieur du boitier **100** pour procéder à des opérations de fabrication, notamment pour souder le premier collecteur de courant **31** sur la surface de contact électrique intérieure **S10** du premier terminal **11** ou encore manipuler la pièce annulaire intérieure **33A** pour faciliter sa coopération avec la pièce annulaire extérieure **33B.** Pour faciliter la soudure, du premier collecteur de courant **31** sur la surface de contact électrique intérieure **S10** du premier terminal **11,** des outils de compression peuvent être insérés depuis le premier orifice secondaire **121** pour comprimer le premier collecteur de courant **31** contre la surface de contact électrique intérieure **S10.**

La butée **34** forme un bouchon de l'orifice secondaire **121** et est configurée pour fermer le premier orifice secondaire **121,** en position assemblée, et présente une extrémité distale logée à l'intérieur du boitier **100** en position assemblée configurée pour venir contre le premier collecteur de courant **31** alors pincé transversalement entre le premier terminal **11** et ladite butée **34.** Une extrémité proximale de ladite butée **34** forme une tête de la butée **34** et vient couvrir le premier orifice secondaire **121** à l'extérieur du boitier **100** et fermer ledit orifice **121.** Cette extrémité proximale est fixée à la paroi **103B** du boitier **100** associée par des moyens de fixation telle qu'une soudure. Pour améliorer l'étanchéité du boitier **100,** le corps de la butée **34** au droit du premier orifice secondaire **121** présente une section ajustée au profil dudit orifice secondaire **121.**

Selon différents modes de réalisation, la butée **34** peut être fixée au premier orifice secondaire **121** par soudage, par clipsage ou par sertissage pour fermer le premier orifice secondaire **121** de façon étanche aux gaz.

La cellule **10** peut en outre comprendre une garniture isolante (non représentée) pour isoler électriquement à l'intérieur du boitier **100** l'ensemble de connectique depuis le premier collecteur **31** jusqu'au premier terminal **11.** La garniture isolante peut présenter la forme d'un film en matériau électriquement isolant pour empêcher tout faux contact ou mauvaise circulation du courant dans le premier terminal **11.**

De façon quasi-symétrique par rapport à l'axe longitudinal de référence **X,** la cellule **10** comporte, à une autre extrémité axiale, une deuxième interface de fixation (non représentée) maintenant fixement en position le deuxième terminal de cellule **12** à travers le deuxième orifice principal **112,** étant entendu que le deuxième terminal de la cellule **12** est positionné dans un sens inversé par rapport au premier terminal **11.**

Un deuxième collecteur (non visible sur les figures) de courant permet de relier électriquement les électrodes d'un deuxième pôle électrique de l'empilement 301, par exemple de polarité négative, au deuxième terminal **12** de cellule **10.**

La configuration de l'ensemble de connectique depuis le deuxième collecteur jusqu'au deuxième terminal **12** est similaire à celui associé au premier terminal **11.** En substance, ces configurations diffèrent essentiellement en ce que le deuxième terminal **12** est orienté transversalement dans une direction opposée à celle du premier terminal **11.** En effet, l'orientation est inversée puisque le deuxième orifice principal **112** traverse la paroi opposée **103B** du boitier **100.**

Bien entendu, les interfaces de fixation **110** des terminaux **11, 12** la cellule **10** de batterie au boitier **10** ne sont pas exhaustifs et peuvent comporter des composants supplémentaires ou différents permettant d'assurer les mêmes fonctions que décrites précédemment, en particulier le maintien en position et l'isolation électrique des premier et deuxième terminaux **11, 12** de cellule. Les fonctions de maintien et d'étanchéité par les interfaces de fixation **110,** en particulier ici par la paire de pièces annulaires **33A, 33B,** pourrait également être assurer par des éléments distincts. Toutefois, la configuration telle que décrite en référence aux figures permet de limiter le nombre de pièces et de simplifier la fabrication de la cellule, impactant également le coût de revient à la baisse. Il en est de même s'agissant des fonctions de bouchon et de pincement en partie de la butée **34** qui pourraient également être assurées par des éléments distincts.

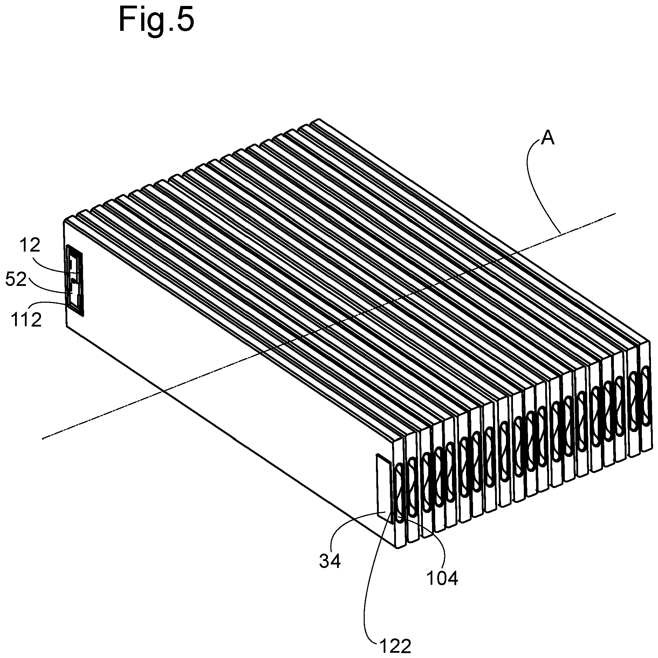

La figure 5 illustre un assemblage **1** d'une pluralité de cellules **10** dans un module de batterie à l'aide de moyens de compression, selon un mode de réalisation préférentiel de l'invention.

Les cellules **10** sont alignées suivant un axe d'assemblage **A** confondu avec les axes transversaux médians de chaque cellule **10** et orthogonal aux axes longitudinaux des cellules **10.**

Les cellules **10** sont accolées et en vis-à-vis deux à deux suivant l'axe d'assemblage, de sorte que la première surface de contact électrique **51** du premier terminal **11** de la première des deux cellules **10** vient en contact avec la deuxième surface de contact électrique **S2** du deuxième terminal **12** de la deuxième des deux cellules adjacentes. Dans un tel assemblage chacune des cellules d'une paire de cellules données est en vis-à-vis axialement par rapport à l'axe d'assemblage.

Les cellules **10** se trouvant aux deux extrémités axiales de l'assemblage par rapport à l'axe d'assemblage, sont connectées électriquement à deux portions de carter d'un module de batterie (non représentées). De préférence, les deux portions de carter de module forment des moyens de compression pour presser l'assemblage de part et d'autre de l'axe d'assemblage et maintenir le contact entre les surfaces de contacts électriques **S1, S2** des terminaux **11, 12.**

Chaque cellule **10** adjacente est compressée de sorte à maintenir les surfaces de contacts électriques **S1, S2** des terminaux **11, 12** en contact et en appui l'une contre l'autre. Cette connexion est localisée au niveau du seul terminal de sorte à créer un jeu au niveau de zones d'espacements entre deux cellules adjacentes à distance surfaces de contacts électriques **S1, S2** des terminaux **11, 12.** Un tel jeu peut laisser un degré de mobilité à une cellule dans l'assemblage.

Pour pallier une telle contrainte, l'assemblage de cellules **10** peut disposer de séparateurs ou tampons de compensation permettant de compenser la distance entre deux extrémités longitudinales de deux grandes parois latérales **104A, 104B** de deux cellules **10** adjacentes qui ne sont pas reliées par des terminaux de cellules **11, 12.** Plus précisément, lorsque deux terminaux **11, 12** de deux cellules adjacentes sont en contact suivant un axe transversal **Y',** un séparateur coplanaire à la surface de contact électrique des deux terminaux **11, 12** associés et centré sur l'axe transversal **Y"** peut être inséré pour compenser la distance entre les deux cellules **10.** Un tel séparateur peut ainsi être interposé entre chacune des cellules adjacentes ou entre les cellules **10** se trouvant aux deux extrémités axiales de l'assemblage par rapport à l'axe d'assemblage et le carter de module correspondant.

Selon d'autres modes de réalisation, l'assemblage de la pluralité de cellules **10** peut être réalisé par d'autres moyens de compression disposés de part et d'autre de l'axe d'assemblage ou entre les terminaux **11, 12** des cellules, par exemple.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Godet (20) pour un boitier (100) d'une cellule (10) de batterie, le godet (20) comprenant au moins deux parois latérales (103A, 103B) s'étendant parallèlement entre elles et parallèlement à un axe de référence (X), le godet (20) étant **caractérisé en ce qu'**il comprend :
- un premier orifice principal (111) formé sur une première (103A) des deux parois latérales et configuré pour accueillir un premier terminal (11) de cellule (10) ; et
- un deuxième orifice principal (112) formé sur une deuxième (103B) des deux parois latérales, le deuxième orifice (112) étant configuré pour accueillir un deuxième terminal (12) de cellule (10).

2. Godet (20) selon la revendication 1, **caractérisé en ce qu'**il comporte au moins quatre parois latérales (103A, 103B, 104A, 104B) s'étendant parallèlement entre elles deux à deux et parallèlement à un axe de référence (X) depuis une première portion d'extrémité (201") jusqu'à une deuxième portion d'extrémité (202"), le premier orifice principal (111) étant disposé au voisinage de la première portion d'extrémité (201"), et le deuxième orifice principal (121) étant disposé au voisinage de la deuxième portion d'extrémité (202").

3. Godet (20) selon la revendication 1 ou 2, **caractérisé en ce qu'**il comprend :
- un premier orifice secondaire (121) complémentaire du premier orifice principal (111), le premier orifice secondaire (121) étant disposé de préférence transversalement en regard du premier orifice principal (111) ; et/ou
- un deuxième orifice secondaire (122) complémentaire du deuxième orifice principal (112), le deuxième orifice secondaire (122) étant disposé de préférence transversalement en regard du deuxième orifice principal (112).

4. Godet (20) selon l'une quelconque des revendications précédentes, **caractérisé en ce qu'**il est au moins en partie, de préférence intégralement, en matériau(x) métallique(s).

5. Boitier (100) de cellule (10) pour une cellule (10) de batterie, **caractérisé en ce qu'**il comprend un godet (20) selon l'une quelconque des revendications précédentes, et au moins un couvercle (21) configuré pour fermer un espace intérieur (30) du godet (20).

6. Boitier (100) selon la revendication précédente, **caractérisé en ce que** au moins une paroi du boitier (100) est pourvue d'au moins un évent d'aération (104) fermé par une paroi amincie configurée pour former un point de faiblesse du boitier (100) en cas d'effet de gonflement contenu à l'intérieur de la cellule (10), de préférence une paroi du couvercle (21).

7. Boitier (100) selon la revendication 5 ou 6, **caractérisé en ce que** le boitier (100) comporte une première (101) et une deuxième (102) parois d'extrémité et quatre parois latérales (103A, 103B, 104A, 104B) s'étendant parallèlement entre elles deux à deux et parallèlement à l'axe de référence (X) depuis la première paroi d'extrémité (101) jusqu'à la deuxième paroi d'extrémité (102), les première (103A) et deuxième (103B) parois latérales du boitier (100) étant formées par des grandes surfaces latérales du boitier (100), c'est-à-dire des surfaces présentant chacune une aire supérieure à une aire de chacune des surfaces des deux autres parois latérales (104A, 104B) et supérieure à une aire de chacune des surfaces des parois d'extrémités (101, 102) du boitier (100).

8. Boitier (100) selon l'une quelconque des revendications 5 à 7, **caractérisé en ce qu'**il comporte un premier couvercle (21) et un deuxième couvercle (22), portant respectivement la première (101) et la deuxième (102) parois d'extrémité.

9. Boitier (100) selon l'une quelconque des revendications 5 à 8, **caractérisé en ce qu'**il possède une longueur supérieure à 250 mm, de préférence supérieure à 300 mm et/ou inférieure à 1500 mm, de préférence inférieure à 1200 mm.

10. Cellule (10) de batterie **caractérisée en ce qu'**elle comprend un boitier (100) de cellule (10) selon l'une des revendications 5 à 9.

11. Cellule (10) de batterie selon la revendication 10, **caractérisée en ce que** le boitier (100) délimite un espace intérieur (30) de la cellule (10) dans lequel est logé au moins un empilement (301) d'électrodes positives et négatives, les électrodes positives étant reliées les unes aux autres à un premier terminal (11) de cellule (10) et les électrodes négatives étant reliées les unes aux autres à un deuxième terminal (12) de cellule (10), et **en ce que** :
- le premier terminal (11) de cellule (10) est maintenu fixement par une interface de fixation (110) dans le premier orifice principal (111) ; et
- le deuxième terminal (12) de cellule (10) est maintenu fixement par une interface de fixation dans un deuxième orifice principal (112).

12. Cellule (10) de batterie selon les revendications 10 ou 11, **caractérisée en ce que** les premier et deuxième terminaux (11, 12) sont orientés suivant deux directions opposées.

13. Cellule (10) de batterie selon l'une quelconque des revendications 10 à 12, **caractérisée en ce que** :
- le premier terminal (11) ferme de manière étanche le premier orifice principal (111) du godet (20) ; et
- le deuxième terminal (12) ferme de manière étanche le deuxième orifice principal (112) du godet (20).

14. Assemblage d'une pluralité de cellules (10) de batterie selon l'une quelconque des revendications 10 à 13, **caractérisé en ce que** les cellules (10) sont accolées successivement deux à deux suivant un axe d'assemblage, de sorte que pour chaque paire de cellules adjacentes de la pluralité de cellules, un premier terminal (11) de l'une des cellules de la paire de cellules adjacentes est en contact avec un deuxième terminal (12) de l'autre des cellules de la paire de cellules adjacentes.

15. Assemblage selon la revendication précédente, **caractérisé en ce qu'**il comprend des moyens de compression pour presser l'assemblage de cellules (10) de part et d'autre dudit assemblage de cellules (10) suivant l'axe d'assemblage.
